# FASCICULE DE BREVET EUROPEEN

(11) **EP 3 297 070 B1**
(45) Date de publication et mention de la délivrance du brevet: **27.02.2019**
(21) Numéro de dépôt: 17189327.4
(22) Date de dépôt: 05.09.2017
(51) Int. Cl.: H01M 4/133, H01M 4/134, H01M 4/36, H01M 10/0585, H01M 10/44, H01M 4/38, H01M 4/587, H01M 10/0525, H01M 4/02

(54) **BATTERIE DE TYPE LITHIUM COMPORTANT UNE ELECTRODE NEGATIVE A DUREE DE VIE AMELIOREE**
BATTERIE VOM TYP LITHIUM-BATTERIE, DIE EINE NEGATIVELEKTRODE MIT VERBESSERTERE LEBENSDAUER ENTHÄLT
LITHIUM BATTERY COMPRISING A NEGATIVE ELECTRODE WITH IMPROVED SERVICE LIFE

(30) Priorité: 19.09.2016 FR 1658734
(43) Date de publication de la demande: 21.03.2018
(73) Titulaire: COMMISSARIAT À L'ÉNERGIE ATOMIQUE ET AUX ÉNERGIES ALTERNATIVES, 75015 Paris (FR)
(72) Inventeur: BOHNKE, Marc, 38450 LE GUA (FR); CHAZELLE, Sophie, 38210 VOUREY (FR); REYNIER, Yvan, 38120 SAINT-EGREVE (FR)
(74) Mandataire: GIE Innovation Competence Group

(56) Documents cités:
- US-A1- 2015 280 221
- US-A1- 2016 133 930

## Description

L'invention concerne les dispositifs de stockage d'énergie électrique, en particulier les batteries rechargeables au Lithium, par exemple les batteries Li-ion.

Les accumulateurs Li-ion sont de plus en plus utilisés comme source d'énergie autonome, en particulier dans les applications liées à la mobilité électrique. Cette tendance s'explique par des densités d'énergie massique et volumique nettement supérieures à celles des accumulateurs nickel cadmium et nickel-hydrure métallique et également par une baisse des coûts spécifiques liés à cette technologie.

La batterie lithium-ion est basée sur l'échange réversible de l'ion lithium entre une électrode positive et une électrode négative, par l'intermédiaire d'un électrolyte. Un séparateur isolant est disposé entre l'électrode positive et l'électrode négative.

Des matériaux à base de carbone, en particulier du graphite, ont été développés avec succès et largement diffusés comme matériaux électrochimiquement actifs ou électrocatalytiques pour les électrodes négatives pour accumulateurs Li-ion. Ces matériaux sont particulièrement performants du fait de leur structure propice à l'intercalation et la désintercalation du lithium et du fait de leur stabilité au cours des différents cycles de charge et de décharge.

Toutefois, la capacité spécifique théorique du graphite reste largement inférieure à celle du lithium métallique.

Certains métaux susceptibles d'incorporer le lithium se sont révélés être des alternatives prometteuses aux matériaux d'anodes à base de carbone cristallin. En particulier, avec une capacité théorique estimée à 3578 mAh/g, le silicium représente une alternative intéressante au graphite. Néanmoins, à l'heure actuelle, une exploitation viable des électrodes à base de silicium n'est pas envisageable dans les applications où la durée de vie est prépondérante : les accumulateurs Li-ion contenant de telles électrodes présentent des problèmes de perte de capacité lors des cycles de charge/décharge répétés, et ce, quel que soit le régime de courant envisagé. Ce problème de durée de vie est inhérent à la présence de silicium. En effet, lors de la charge, la réduction des ions lithium par réaction électrochimique conduit à la formation d'un alliage LiₓSi. Il a été établi que la formation de l'alliage Li_{4.5}Si s'accompagne d'une augmentation volumique de l'électrode pouvant atteindre 300%. Par la suite, lors de la décharge, la délithiation de l'alliage entraine le phénomène inverse, à savoir la diminution du volume de la particule.

Ce phénomène et la répétition de ces cycles d'expansion/contraction de la particule d'alliage de silicium va être à l'origine de contraintes mécaniques au sein de celle-ci, conduisant à sa décrépitation et à son amorphisation. Les particules de silicium se fracturent au fur et à mesure des cycles de charge/décharge. Ainsi, chaque cycle de charge/décharge produit une surface active et fraîche pour la réduction de l'électrolyte, ne conduisant pas à une couche de passivation stable, prépondérante pour un bon fonctionnement de l'accumulateur, et créant ainsi une perte irréversible de capacité à chaque cycle.

L'utilisation de silicium nanostructuré, d'une taille inférieure à environ 150 nanomètres a été proposée de façon à réduire la dégradation de la durée de vie lors du cyclage, grâce à sa fracturation plus réduite. Malgré tout, l'expansion volumique du silicium, quel que soit sa taille, ne peut pas être complètement contenue dans l'état des connaissances actuelles. Des solutions palliatives sont essentiellement développées concernant l'environnement de la particule, afin de limiter la déformation de l'électrode. Par exemple, de telles solutions proposent des mélanges de différents composés avec le silicium ou encore le recours à des revêtements protecteurs.

Des compromis ont été recherchés entre la capacité de la batterie et la stabilité en cyclage, en mélangeant du graphite et du silicium à différentes proportions : le silicium étant destiné à accroître la capacité de l'électrode, le graphite étant destiné à accroître sa stabilité en cyclage. Un tel mélange est typiquement réalisé par incorporation du silicium avec le graphite, soit au moment du traitement de poudres, soit au moment de leur incorporation dans une encre destinée à enduire un support de l'électrode.

Cependant, avec un tel mélange de graphite et de silicium, une défaillance par décohésion globale de l'électrode a lieu malgré tout. La décrépitation et l'expansion volumique répétée du silicium conduit en effet à une perte de connexion électrique globale au sein de l'électrode. Ainsi, même si le silicium est mélangé avec un autre matériau plus stable en cyclage, le silicium induit malgré tout des contraintes mécaniques telles que la perte de capacité est à la fois très rapide et totale après quelques dizaines de cycles seulement.

Le document US2015/0280221 propose de superposer un premier élément électrochimiquement actif fixé sur le support et incluant un composé carboné, et un deuxième élément électrochimiquement actif incluant du Silicium. Ce document vise à éviter que le deuxième élément électrochimiquement actif soit fixé directement sur le support pour éviter une trop grande différence de niveau d'expansion volumique entre le support et cet élément, et donc éviter un risque de dislocation. L'électrode négative reste confrontée à un risque de dislocation au niveau de l'interface entre les premier et deuxième éléments électrochimiquement actifs.

Le document US 2016/133930 divulgue une batterie Lithium-ion dont l'électrode positive comprend deux éléments électrochimiquement actifs, différents mais de même polarité, fixés sur un collecteur de courant commun.

L'invention vise à résoudre un ou plusieurs de ces inconvénients. L'invention vise notamment à éviter une décohésion globale de l'électrode négative, tout en améliorant sa capacité. L'invention porte ainsi sur une batterie rechargeable de type Lithium-ion, comprenant une électrode négative, telle que définie dans la revendication 1 annexée.

L'invention porte également sur les variantes des revendications dépendantes. L'homme du métier comprendra que chacune des caractéristiques des revendications dépendantes peut être combinée indépendamment aux caractéristiques de la revendication 1, sans pour autant constituer une généralisation intermédiaire.

Un autre aspect de l'invention porte sur un système, tel que défini dans les revendications annexées, incluant une batterie telle que définie ci-dessus, le profil de tension en décharge de la batterie en fonction de son état de charge présentant un premier tronçon intermédiaire avec une pente sensiblement constante pour des valeurs d'état de charge supérieures à un seuil, et présentant un deuxième tronçon intermédiaire avec une pente supérieure à celle du premier tronçon intermédiaire lorsque l'état de charge est inférieur audit seuil ; -un circuit de gestion de la charge et de la décharge de la batterie, configuré pour interrompre la décharge de la batterie avant que l'état de charge de la batterie n'atteigne ledit seuil.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe transversale schématique d'un exemple d'un mode de réalisation d'une batterie selon l'invention ;
- la figure 2 est un diagramme comparant la tension d'une cellule pour différentes configurations d'électrodes négatives, en charge et en décharge ;
- la figure 3 est un diagramme illustrant la capacité différentielle en décharge, pour différentes configurations d'électrodes négatives ;
- la figure 4 est un diagramme comparant la tension d'une cellule selon deux configurations d'électrode négative, en fonction du nombre de cycles réalisés ;
- la figure 5 est un diagramme comparant les capacités de rétention, pour différentes configurations d'électrodes négatives, en fonction du nombre de cycles ;
- la figure 6 est une vue de dessus de la batterie de la figure 1.

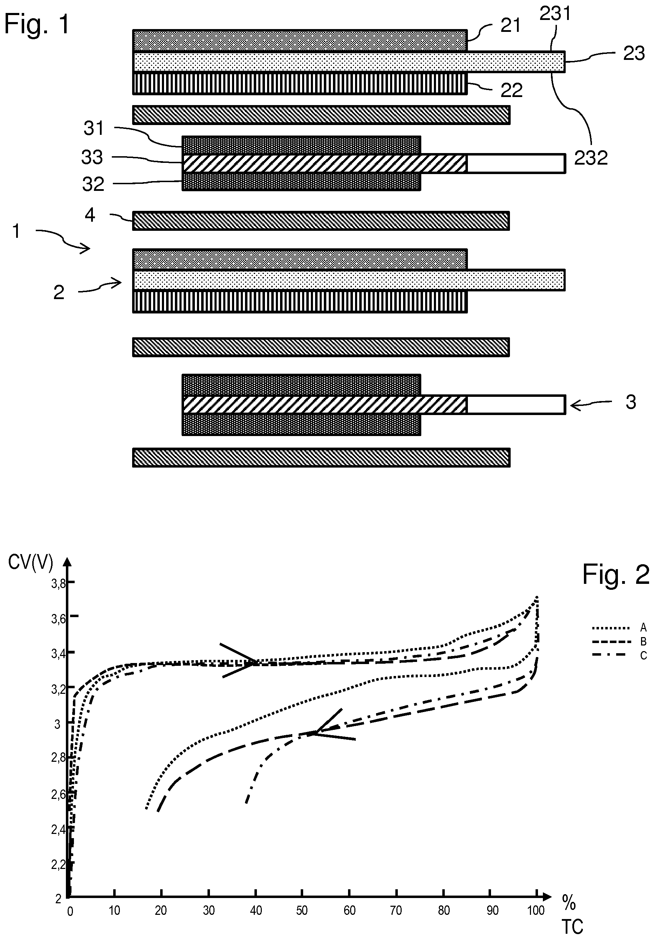

La figure 1 est une vue en coupe transversale schématique d'un exemple de mode de réalisation d'une batterie rechargeable de type Lithium-ion 1 selon l'invention. La batterie 1 comprend ici une alternance d'électrodes négatives 2 et d'électrodes positives 3, séparées par des parois isolantes 4 électriquement. Les électrodes 2 et 3 sont en contact avec un électrolyte, non illustré. La batterie 1 peut comprendre un boîtier souple ou rigide étanche non illustré, dans lequel les électrodes 2 et 3, les parois isolantes 4 et l'électrolyte sont logés. Les interconnexions entre les différentes électrodes 2 et 3 ne sont pas illustrées ici.

Chaque électrode négative 2 comporte un support collecteur de courant 23, par exemple sous forme d'un feuillard métallique avec deux parois opposées 231 et 232. Au moins la surface du support collecteur de courant 23 est conductrice.

Chaque électrode négative 2 comporte un premier élément électrocatalytique ou électrochimiquement actif 21, fixé sur la face 231 de son support 23. Chaque électrode négative 2 comporte également un deuxième élément électrocatalytique ou électrochimiquement actif 22, fixé sur la face 232 de son support 23. Le premier élément électrochimiquement actif 21 est dissocié du deuxième élément électrochimiquement actif 22. Autrement dit, le premier élément électrochimiquement actif 21 est distinct ou séparé du deuxième élément électrochimiquement actif 22.

Le premier élément électrochimiquement actif 21 inclut du graphite dans une proportion en masse au moins égale à 75%, de préférence au moins égale à 80%, avantageusement au moins égale à 85%, et plus préférentiellement au moins égale à 90%. Dans les exemples ayant fait l'objet de tests, cette proportion de graphite s'est élevée à 96%. Le graphite peut comprendre du graphite synthétique ou du graphite naturel, ou un mélange des deux. Le graphite peut être mélangé avec un additif carboné assurant par exemple les propriétés suivantes : la conduction électronique inter-particules, la conduction électronique dans une direction particulière, ou encore la conduction ionique dans l'électrode. L'additif carboné peut être choisi parmi les noirs, les fibres de carbones, le graphène, et de manière générale les nano-objets carbonés. Dans cet exemple, du graphite est décrit. On pourra cependant remplacer le graphite pour tout autre composé carboné capable d'insérer réversiblement les ions lithium (c'est-à-dire compatible de par sa structure pour l'insertion des ions lithium) dans les mêmes proportions et mêmes combinaisons que pour le graphite mentionné ci-dessus.

Le premier élément électrochimiquement actif 21 inclut avantageusement un liant et un épaississant. Dans les exemples ayant fait l'objet de tests, la proportion d'un mélange incluant un lien et un épaississant s'élève à 4% en masse. Le liant peut être choisi parmi les caoutchoucs, tel que le SBR (Styrene Butadiene rubber). Dans les tests détaillés par la suite, ce liant a été utilisé avec une proportion en masse de 2%. L'épaississant est par exemple une cellulose substituée telle que la CMC (Carboxymethylcelulose), avec un degré de substitution par exemple compris entre 0.7 et 0.9 et une masse molaire comprise entre 250000 et 500000 g/mol. Dans les tests détaillés par la suite, cet épaississant a été utilisé avec une proportion en masse de 2%.

Afin de minimiser au maximum les risques de dislocation du premier élément électrochimiquement actif 21, celui-ci inclut avantageusement au plus 2% en masse de Silicium, de préférence au plus 1% en masse, et avantageusement au plus 0,1% en masse (cette dernière quantité étant alors considérée comme sensiblement nulle).

Le deuxième élément électrochimiquement actif 22 inclut du Silicium dans une proportion en masse au moins égale à 70%, de préférence au moins égale à 75%, avantageusement au moins égale à 80%, et plus préférentiellement au moins égale à 82%. Dans les exemples ayant fait l'objet de tests, cette proportion de Silicium s'est élevée à 82%. Le Silicium du deuxième élément électrochimiquement actif 22 est avantageusement de type cristallin. Le deuxième élément électrochimiquement actif 22 inclut avantageusement un liant et un additif conducteur. Dans les exemples ayant fait l'objet de tests, la proportion d'un mélange incluant un lien et un additif conducteur s'élève à 18% en masse. L'élément 22 peut comprendre des fibres de carbone de dimensions 10 à 20µm de long et 100 nm de diamètre et de la Carboxymethylcellulose avec un degré de substitution compris entre 0.7 et 0.9 et une masse molaire comprise entre 250000 et 500000 g/mol. Ces fibres de carbone peuvent être utilisées avec comme fonction de former un additif conducteur. Pour les tests, ces fibres ont été intégrées dans l'élément 22 à une proportion de 12%. Un liant en CMC a été utilisé dans l'élément 22 des tests, avec une proportion de 6% en masse.

Afin d'accroître au maximum l'apport du Silicium à la capacité d'une électrode négative 2, le deuxième élément électrochimiquement actif 22 inclut avantageusement au plus 2% en masse de graphite, de préférence au plus 1% en masse, et avantageusement au plus 0,1% en masse (cette dernière quantité étant alors considérée comme sensiblement nulle).

La fixation de l'élément électro catalytique 21 et de l'élément électro catalytique 22 sur des faces opposées d'un même support permet de garantir leur dissociation et leur séparation physique.

De façon surprenante, la combinaison des éléments électrochimiquement actifs 21 et 22 dissociés, avec pour l'un une composition essentiellement en graphite, et pour l'autre une composition essentiellement en Silicium, aboutit à des performances de la batterie nettement supérieures à ce qui peut être attendu : la durée de vie en nombre de cycles est proche de celle d'une électrode négative utilisant uniquement du graphite, et sa capacité est très nettement accrue par rapport à celle d'une électrode utilisant uniquement du graphite. Il n'y a ici aucun contact physique entre les éléments électrochimiquement actifs 21 et 22.

Avantageusement, le graphite du premier élément 21 présente un diamètre D50 compris entre 5 et 20µm. Avantantageusement, le graphite du premier élément 21 présente une surface spécifique comprise entre 1 et 15m²/g.

Le support collecteur de courant 23 est avantageusement en alliage de Nickel ou en alliage de Cuivre.

Chaque électrode positive 3 peut présenter une structure connue en soi. Chaque électrode positive 3 comporte ici un support collecteur de courant 33, dont au moins la surface est conductrice. Le support collecteur de courant 33 est ici un feuillard métallique, et comporte des éléments électrochimiquement actifs 31 et 32 fixés sur des faces opposées du collecteur de courant 33. Les éléments électrochimiquement actifs 31 et 32 peuvent par exemple être (de façon non limitative) des oxydes lithiés comprenant du manganèse de structure spinelle, des oxydes lithiés de structure lamellaire ou des mélanges de ceux-ci, des oxydes lithiés à charpentes polyanioniques de formule LiM_{y}(XO_{z})ₙ avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, avec y, z et n des entiers positifs. Pour les tests détaillés par la suite, l'électrode positive 3 sélectionnée comporte des éléments électrochimiquement actifs présentant la composition suivante en masse : 90% de LiFePO₄, 5% d'additif conducteur, et 5% de PVDF.

Chaque paroi isolante 4 peut par exemple être formée (de façon non limitative) avec un film polymère microporeux. Un tel film peut comprendre une superposition de deux ou trois couches de Polyethylene (PE) et de Polypropylène (PP). Un tel film microporeux peut comprendre typiquement une épaisseur comprise entre 15 et 30 µm, et présenter une porosité comprise entre 30 et 50%.

De façon connue en soi, l'électrolyte peut (par exemple, et de façon non limitative) être un sel de lithium comportant au moins un cation Li⁺ choisi parmi le lithium bis(oxalato)borate (LiBOB), des composés de formule LiClO₄, LiAsF₆, LiPF₆, LiBF₄. Le sel de lithium est, de préférence, dissout dans un solvant ou un mélange de solvants polaires aprotiques, par exemple choisis parmi l'éthylène carbonate (noté EC), le propylène carbonate (PC), le diméthylcarbonate (DMC), le diéthylcarbonate (DEC), le méthyléthylcarbonate (MEC). L'électrolyte peut également comprendre des additifs tels que du VinyleneCarbonate (VC) ou du Fluoroethylenecarbonate (FEC).

Avantageusement, la masse de graphite dans le premier élément 21 est au moins 1,5 fois supérieure à la masse du Silicium dans le deuxième élément 22. On optimise ainsi l'utilisation de ces composés dans l'électrode négative 2.

La figure 2 est un diagramme comparatif des performances de différentes configurations d'électrodes positives, en charge après mise en service (groupe de courbes les plus hautes), et en décharge après mise en service (groupe de courbes les plus basses). Le diagramme illustre en abscisse la capacité totale Tc en %, et en ordonnée la tension de cellule CV en Volts.

Les courbes en pointillés (A) correspondent à une électrode négative selon l'invention, les courbes en trait discontinu correspondent à une électrode négative avec des éléments électrochimiquement actifs en silicium (B), et les courbes en tiret-point correspondent à une électrode négative comportant deux faces avec des éléments électrochimiquement actifs incluant un mélange de graphite et de Silicium (35% en masse de Silicium pur d'un diamètre de particules compris entre 1 et 10µm, 65% en masse de graphite pur d'un diamètre de particules compris entre 10 et 20µm) (C).

Le mode de test après mise en service a été basé sur le cyclage suivant, répété deux fois :
- un repos de 15 min ;
- une charge en 20 heures jusqu'à 3,7V à 25°C ;
- un repos de 15 min ;
- une décharge en 20 heures jusqu'à 2,5V à 25°.

On constate étonnamment que les performances en charge d'une batterie avec une électrode négative selon l'invention (A) sont meilleures que celles des autres configurations dès le début de la charge de 20 à 100% d'état de charge (SOC).

En décharge, on constate également que les performances de la batterie munie de l'électrode négative 3 selon l'invention (cas A) est nettement meilleure que les autres cas (B ou C). On observe une polarisation (différence de tension entre charge et décharge) plus faible avec l'invention (cas A).

La courbe de décharge de la batterie munie de l'électrode négative selon l'invention (cas A) montre que la décharge présente un premier tronçon intermédiaire linéaire avec une faible décroissance et formant sensiblement un plateau, et un deuxième tronçon intermédiaire sensiblement linéaire et présentant une forte décroissance. La polarisation à mi-plateau du premier tronçon intermédiaire est ici inférieure à 0,15V.

Par des essais, on a pu déterminer que le deuxième tronçon intermédiaire [SOC- 0-65%] était défini essentiellement par les propriétés de l'élément 22, alors que le premier tronçon intermédiaire [SOC 65%-100] était défini essentiellement par les propriétés de l'élément 21. Les inventeurs ont également déterminé que l'emplacement de la jonction entre les deux tronçons intermédiaires était déterminé pour le ratio entre la proportion en masse de graphite dans l'élément 21, sur la proportion en masse de Silicium dans l'élément 22. L'emplacement de la jonction entre les deux tronçons intermédiaires est ici placé à un état de charge de 65% approximativement.

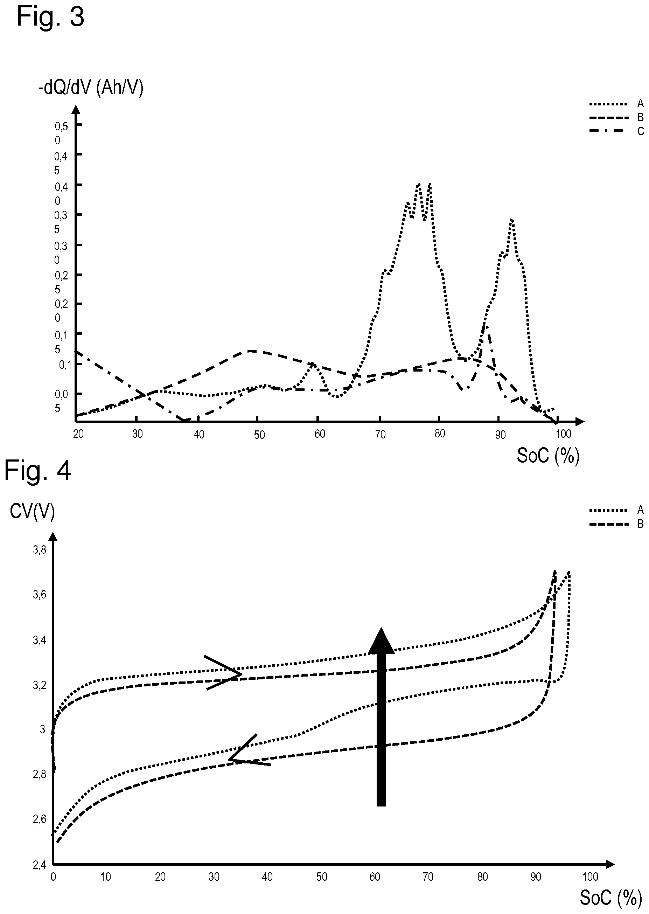

La figure 3 illustre la capacité différentielle en décharge des mêmes batteries que dans l'exemple de la figure 2. Pour la batterie 1 selon un exemple de l'invention (cas A), on constate deux pics aux états de charge 75% et 95%, ce qui confirme bien que l'activité du graphite de l'élément 21 est maximale dans un état de charge compris entre 65 et 100%. L'activité du Silicium de l'élément 22 a lieu dans un état de charge situé entre 0 et 65%, avec une valeur de capacité différentielle inférieure à 0,15Ah/V.

La dissociation des éléments 21 et 22 de la batterie 1 permet bien de séparer les activités de leurs composés, dans deux zones distinctes en fonction de l'état de charge de la batterie 1.

Une telle batterie 1 présentant deux tronçons intermédiaires à profils de décharge assez différents peut être associée à un circuit de gestion de la batterie limitant les cycles de décharge au premier tronçon intermédiaire. On bénéficie alors de la capacité apportée par l'élément 22 à base de Silicium, en limitant l'utilisation de la batterie 1 à sa zone d'utilisation où elle présente le plus de stabilité de sa capacité lors des charges et décharges répétées. Le circuit de gestion de la batterie peut par exemple interrompre la décharge de la batterie 1 avant que sa tension n'atteigne le seuil de jonction entre les premier et deuxième tronçons intermédiaires.

On peut ainsi bénéficier de l'effet du Silicium sur la capacité de la batterie 1, sans nécessairement le dégrader excessivement. Un tel mode de gestion de la batterie 1 permet encore d'améliorer sa durée de vie. Par ailleurs, le circuit de gestion pourra permettre de façon épisodique une décharge au-delà du seuil, afin de bénéficier de toute la capacité de la batterie 1 dans certains cas particuliers d'utilisation.

La figure 4 est un diagramme comparant la tension de charge et de décharge d'une cellule selon deux configurations d'électrode négative, après plusieurs centaines de cycles de charge/décharges détaillés précédemment. Les courbes en pointillés correspondent à une batterie 1 munie d'une électrode négative selon le mode de réalisation de l'invention (cas A). Les courbes en trait discontinu correspondent à une batterie 1 présentant une électrode négative ayant des éléments électrocatalyseurs en Silicium (cas B).

Après plusieurs centaines de cycles, une électrode négative 3 selon l'invention (cas A) présente des performances bien meilleures que celles de l'électrode négative à éléments en Silicium (cas B): la polarisation de l'électrode négative selon l'invention est beaucoup moins élevée que pour l'électrode négative ayant des éléments électrochimiquement actifs en Silicium. On peut constater que la tension d'une batterie composée par l'électrode négative 3 selon l'invention (cas A) est accrue par rapport à celle de la configuration servant de référence (cas B).

Après plusieurs centaines de cycles de charge/décharge, on constate que l'électrode négative 3 selon l'invention (cas A) fournit une décharge comportant toujours le premier tronçon intermédiaire dans la zone d'état de charge [SOC 50%-100%] sensiblement linéaire et formant sensiblement un plateau, puis le deuxième tronçon intermédiaire linéaire dans la zone [SOC 0-50%] avec une forte décroissance.

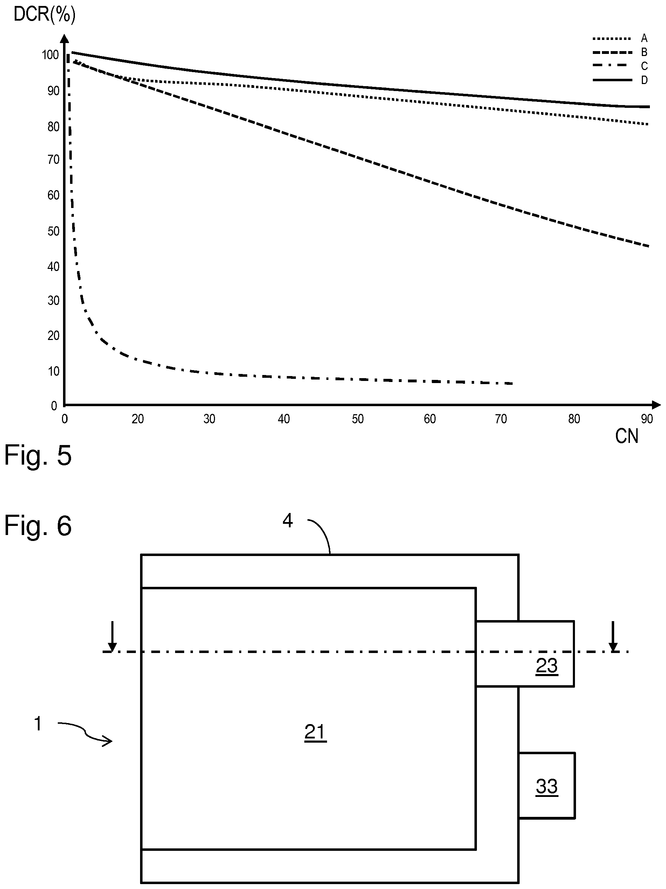

La figure 5 est un diagramme illustrant les capacités de rétention DCR (pour Discharge capacity rétention en langue anglaise) de différentes configurations d'électrodes négatives en fonction du nombre de cycles CN (pour Cycle number en langue anglaise) de charge/décharge réalisés, par rapport à leurs capacités de rétention de départ. En trait plein, on a illustré un exemple d'une électrode négative comportant des éléments électrochimiquement actifs en graphite sur les deux faces de son support collecteur de courant (cas D). Le trait discontinu correspond à l'électrode négative ayant des éléments électrochimiquement actifs en Silicium (cas B). En tiret-point, on a illustré le cas de figure d'une électrode négative ayant des éléments électrochimiquement actifs incluant un mélange de graphite et de Silicium (cas C). L'électrode selon le mode de réalisation de l'invention correspond encore à la courbe en pointillés (cas A).

On constate ainsi que la durée de vie d'une électrode négative selon l'invention est très proche d'une électrode négative à éléments électrochimiquement actifs en graphite, pour des performances très supérieures en capacité. On constate également que la durée de vie de l'électrode négative selon l'invention est nettement plus élevée que celle d'une électrode négative ayant des éléments électrochimiquement actifs en Silicium. La durée de vie d'une électrode négative incluant un mélange de graphite et de Silicium est particulièrement réduite.

De façon connue en soi, la formation d'une électrode négative 2 ou d'une électrode positive 3 peut être réalisée par dépôt, sur une face d'un support collecteur, d'une encre incluant les composants souhaités, puis séchage de cette encre pour obtenir l'électrode souhaitée.

Par calandrage de l'électrode négative 2, la porosité de celle-ci peut être réduite. Une porosité comprise 25 et 45%, de préférence entre 30 et 40% pourra par exemple être obtenue.

Dans le mode de réalisation décrit et illustré précédemment, seulement un type d'élément électrochimiquement actif est utilisé pour chaque face d'un support collecteur de courant 23. Dans cet exemple, l'élément 21 recouvre par exemple au moins deux tiers de la surface de la face 231, et l'élément 22 recouvre au moins deux tiers de la surface de la face 232. Cependant, on peut également envisager de réaliser un élément à base de graphite et un élément électro catalytique à base de silicium sur des emplacements distincts d'une même face du support collecteur de courant 23.

## Revendications

1. Batterie rechargeable (1) de type Lithium-ion, comprenant une électrode négative (2), **caractérisée en ce que** l'électrode négative inclut :
- un support (23) collecteur de courant ;
- un premier élément électrochimiquement actif (21) fixé sur le support (23) et incluant un composé carboné capable d'insérer réversiblement les ions lithium, ce composé carboné étant dans une proportion au moins égale à 75% en masse ;
- un deuxième élément électrochimiquement actif (22) fixé sur le support (23) et incluant du Silicium dans une proportion au moins égale à 70% en masse, lesdits premier et deuxième éléments électrochimiquement actifs étant dissociés l'un de l'autre.

2. Batterie rechargeable (1) selon la revendication 1, dans laquelle la proportion en masse de Silicium dans le premier élément électrochimiquement actif (21) est au plus égale à 2%.

3. Batterie rechargeable (1) selon la revendication 1 ou 2, dans laquelle la proportion en masse de composé carboné dans le deuxième élément électrochimiquement actif (22) est au plus égale à 2%.

4. Batterie rechargeable (1) selon l'une quelconque des revendications précédentes, dans laquelle ledit support (23) comporte des première et deuxième faces opposées (231,232), le premier élément (21) recouvrant au moins les deux tiers de la première face, le deuxième élément (22) recouvrant au moins les deux tiers de la deuxième face.

5. Batterie rechargeable (1) selon l'une quelconque des revendications précédentes, dans lequel le silicium dans le deuxième élément électrochimiquement actif (22) est un agglomérat de particules de silicium nanostructurées, ou du silicium microstructuré présentant un diamétre de particulé élémentaire compris entre 1 et 10µm.

6. Batterie rechargeable (1) selon l'une quelconque des revendications précédentes, dans lequel la masse de l'élément carboné du premier élément électrochimiquement actif est au moins 1,5 fois supérieure à la masse du Silicium dans le deuxième élément électrochimiquement actif.

7. Batterie rechargeable (1) selon l'une quelconque des revendications précédentes, comprenant en outre ;
- une électrode positive (3) ;
- un électrolyte en contact avec l'électrode négative (2) et avec l'électrode positive (3) ;
- une paroi isolante électriquement (4), disposée entre l'électrode négative (2) et l'électrode positive (3).

8. Batterie rechargeable (1) selon l'une quelconque des revendications précédentes, dans lequel ledit élément carboné est du graphite.

9. Batterie rechargeable (1) selon la revendication 8, dans laquelle ledit graphite du premier élément (21) présente un diamètre D50 compris entre 5 et 20µm.

10. Batterie rechargeable (1) selon l'une quelconque des revendications précédentes, dans laquelle ledit élément carboné du premier élément (21) présente une surface spécifique comprise entre 1 et 15m²/g.

11. Batterie rechargeable (1) selon l'une quelconque des revendications précédentes, dans laquelle le support (23) collecteur de courant est en alliage de Nickel ou en alliage de Cuivre.

12. Batterie rechargeable (1) selon l'une quelconque des revendications précédentes, dans laquelle ladite électrode négative (2) présente une porosité comprise entre 25 et 45%.

13. Système, comprenant :
- une batterie (1) selon l'une quelconque des revendications précédentes, le profil de tension en décharge de la batterie en fonction de son état de charge présentant un premier tronçon intermédiaire avec une pente sensiblement constante pour des valeurs d'état de charge supérieures à un seuil, et présentant un deuxième tronçon intermédiaire avec une pente supérieure à celle du premier tronçon intermédiaire lorsque l'état de charge est inférieur audit seuil ;
- un circuit de gestion de la charge et de la décharge de la batterie, configuré pour interrompre la décharge de la batterie avant que l'état de charge de la batterie n'atteigne ledit seuil.

## Patentansprüche

1. Wiederaufladbare Batterie (1) des Lithiumionen-Typs, die eine negative Elektrode (2) besitzt, **dadurch gekennzeichnet, dass** die negative Elektrode Folgendes umfasst:
- einen Stromsammelträger (23;
- ein erstes elektrochemisch aktives Element (21), das an dem Träger (23) befestigt ist und eine kohlenstoffhaltige Komponente enthält, die die Lithiumionen reversibel einfügen kann, wobei diese kohlenstoffhaltige Komponente in einem Anteil von wenigstens 75 Massen-% vorhanden ist;
- ein zweites elektrochemisch aktives Element (22), das an dem Träger (23) befestigt ist und Silicium in einem Anteil von wenigstens 70 Massen-% vorhanden ist, wobei das erste und das zweite elektrochemisch aktive Element ineinander dissoziiert sind.

2. Wiederaufladbare Batterie (1) nach Anspruch 1, wobei der Massenanteil von Silicium in dem ersten elektrochemisch aktiven Element (21) höchstens gleich 2 % beträgt.

3. Wiederaufladbare Batterie (1) nach Anspruch 1 oder 2, wobei der Massenanteil der kohlenstoffhaltigen Komponente in dem zweiten elektrochemischen aktiven Element (22) höchstens gleich 2 % beträgt.

4. Wiederaufladbare Batterie (1) nach einem der vorhergehenden Ansprüche, wobei der Träger (23) eine erste und eine zweite Fläche (231, 232) besitzt, die einander zugewandt sind, wobei das erste Element (21) wenigstens zwei Drittel der ersten Fläche abdeckt und das zweite Element (22) wenigstens zwei Drittel der zweiten Fläche abdeckt.

5. Wiederaufladbare Batterie (1) nach einem der vorhergehenden Ansprüche, wobei das Silicium in dem zweiten elektrochemisch aktiven Element (22) ein Agglomerat von Nanostruktur-Siliciumpartikeln oder von Mikrostruktur-Silicium, das einen elementaren Partikeldurchmesser im Bereich von 1 bis 10 µm aufweist, ist.

6. Wiederaufladbare Batterie (1) nach einem der vorhergehenden Ansprüche, wobei die Masse des kohlenstoffhaltigen Elements des ersten elektrochemischen aktiven Elements wenigstens gleich 1,5 mal höher als die Masse von Silicium in dem zweiten elektrochemischen aktiven Element ist.

7. Wiederaufladbare Batterie (1) nach einem der vorhergehenden Ansprüche, die außerdem Folgendes umfasst:
- eine positive Elektrode (3);
- einen Elektrolyt in Kontakt mit der negativen Elektrode (2) und der positiven Elektrode (3);
- eine elektrisch isolierende Wand (4), die zwischen der negativen Elektrode (2) und der positiven Elektrode (3) angeordnet ist.

8. Wiederaufladbare Batterie (1) nach einem der vorhergehenden Ansprüche, wobei das kohlenstoffhaltige Element Graphit ist.

9. Wiederaufladbare Batterie (1) nach Anspruch 8, wobei das Graphit des ersten Elements (21) einen Durchmesser D50 im Bereich von 5 bis 20 µm aufweist.

10. Wiederaufladbare Batterie (1) nach einem der vorhergehenden Ansprüche, wobei das kohlenstoffhaltige Element des ersten Elements (21) eine spezifische Oberfläche im Bereich von 1 bis 15 m²/g aufweist.

11. Wiederaufladbare Batterie (1) nach einem der vorhergehenden Ansprüche, wobei der Stromsammelträger (23) aus einer Nickellegierung oder einer Kupferlegierung besteht.

12. Wiederaufladbare Batterie (1) nach einem der vorhergehenden Ansprüche, wobei die negative Elektrode (2) eine Porosität im Bereich von 25 bis 45 % aufweist.

13. System, das Folgendes umfasst:
- eine Batterie (1) nach einem der vorhergehenden Ansprüche, wobei das Entladespannungsprofil der Batterie als Funktion ihres Ladezustands für Ladezustandswerte oberhalb eines Schwellenwerts ein erstes Zwischenteilstück mit einer im Wesentlichen konstanten Steigung aufweist und dann, wenn der Ladezustand niedriger als der Schwellenwert ist, ein zweites Zwischenteilstück mit einer Steigung, die höher als jene des ersten Zwischenteilstücks ist, aufweist;
- eine Steuerschaltung zum Laden und Entladen der Batterie, die konfiguriert ist, das Entladen der Batterie zu unterbrechen, bevor der Ladezustand der Batterie den Schwellenwert erreicht.

## Claims

1. Rechargeable battery (1) of the lithium-ion type, comprising a negative electrode (2), **characterized in that** the negative electrode includes:
- a current collector support (23);
- a first electrochemically active element (21) fixed on the support (23) and including a carbon-containing compound capable of inserting the lithium ions reversibly, this carbon-containing compound being in a proportion at least equal to 75 wt%;
- a second electrochemically active element (22) fixed on the support (23) and including silicon in a proportion at least equal to 70 wt%, said first and second electrochemically active elements being separated from one another.

2. Rechargeable battery (1) according to Claim 1, in which the proportion by weight of silicon in the first electrochemically active element (21) is at most equal to 2%.

3. Rechargeable battery (1) according to Claim 1 or 2, in which the proportion by weight of carbon-containing compound in the second electrochemically active element (22) is at most equal to 2%.

4. Rechargeable battery (1) according to any one of the preceding claims, in which said support (23) comprises first and second opposite faces (231,232), the first element (21) covering at least two thirds of the first face, and the second element (22) covering at least two thirds of the second face.

5. Rechargeable battery (1) according to any one of the preceding claims, in which the silicon in the second electrochemically active element (22) is an agglomerate of nanostructured silicon particles, or microstructured silicon having a unit particle diameter between 1 and 10µm.

6. Rechargeable battery (1) according to any one of the preceding claims, in which the weight of the carbon-containing element of the first electrochemically active element is at least 1.5 times greater than the weight of the silicon in the second electrochemically active element.

7. Rechargeable battery (1) according to any one of the preceding claims, further comprising;
- a positive electrode (3);
- an electrolyte in contact with the negative electrode (2) and with the positive electrode (3);
- an electrically insulating wall (4), arranged between the negative electrode (2) and the positive electrode (3).

8. Rechargeable battery (1) according to any one of the preceding claims, in which said carbon-containing element is graphite.

9. Rechargeable battery (1) according to Claim 8, in which said graphite 10 of the first element (21) has a diameter D50 between 5 and 20µm.

10. Rechargeable battery (1) according to any one of the preceding claims, in which said carbon-containing element of the first element (21) has a specific surface area between 1 and 15 m²/g.

11. Rechargeable battery (1) according to any one of the preceding claims, in which the current collector support (23) is of nickel alloy or of copper alloy.

12. Rechargeable battery (1) according to any one of the preceding claims, in which said negative electrode (2) has a porosity between 25 and 45%.

13. System, comprising:
- a battery (1) according to any one of the preceding claims, the voltage profile in discharge of the battery as a function of its state of charge having a first intermediate segment with an approximately constant slope for values of state of charge above a threshold, and having a second intermediate segment with a slope greater than that of the first intermediate segment when the state of charge is below said threshold;
- a circuit for management of the charging and discharge of the battery, configured for stopping discharge of the battery before the state of charge of the battery reaches said threshold.
